(19) Europäisches Patentamt

European Patent Office

Office européen des brevets

(11) Veröffentlichungsnummer: **0 116 572 B1**

(12) **EUROPÄISCHE PATENTSCHRIFT**

(45) Veröffentlichungstag der Patentschrift: **02.09.92**

(21) Anmeldenummer: **83902429.6**

(22) Anmeldetag: **30.07.83**

(86) Internationale Anmeldenummer:
**PCT/DE83/00132**

(87) Internationale Veröffentlichungsnummer:
**WO 84/01042 (15.03.84 84/07)**

(51) Int. Cl.⁵: **G05D 23/19**, F24D 19/10

(54) **VERFAHREN ZUR BILDUNG EINES SOLLWERTES EINER REGEL- BEZIEHUNGSWEISE STEUEREINRICHTUNG FÜR EINE HEIZUNGSANLAGE.**

(30) Priorität: **28.08.82 DE 8224607 U**
**28.08.82 DE 8224608 U**
**13.11.82 DE 8232230 U**
**11.02.83 DE 8303819 U**

(43) Veröffentlichungstag der Anmeldung:
**29.08.84 Patentblatt 84/35**

(45) Bekanntmachung des Hinweises auf die
Patenterteilung:
**02.09.92 Patentblatt 92/36**

(84) Benannte Vertragsstaaten:
**AT BE CH DE FR GB LI LU NL SE**

(56) Entgegenhaltungen:
**DE-A- 1 962 583      DE-A- 2 651 560
DE-A- 3 106 761      FR-A- 2 077 153
FR-A- 2 370 933      FR-A- 2 499 262
GB-A- 540 087**

**See also references of WO8401042**

(73) Patentinhaber: **Joh. Vaillant GmbH u. Co.
Berghauser Strasse 40 Postfach 10 10 61
W-5630 Remscheid(DE)**

(84) Benannte Vertragsstaaten:
**DE LU SE**

(73) Patentinhaber: **n.v. Vaillant s.a.
rue Golden Hopestraat 15
B-1620 Drogenbos(BE)**

(84) Benannte Vertragsstaaten:
**BE**

(73) Patentinhaber: **VAILLANT S.A.R.L
4, Rue des Oliviers Orly-Sénia 326
F-94537 Rungis Cedex(FR)**

(84) Benannte Vertragsstaaten:
**FR**

EP 0 116 572 B1

EP 0 116 572 B1

(73) Patentinhaber: **VAILLANT Ges.m.b.H**
**Forchheimergasse 7 Postfach 56**
**A-1233 Wien(AT)**

(84) Benannte Vertragsstaaten:
**AT**

(73) Patentinhaber: **Vaillant Ltd.**
**Vaillant House Medway City Estate Trident**
**Close**
**Rochester Kent ME2 4EZ(GB)**

(84) Benannte Vertragsstaaten:
**GB**

(73) Patentinhaber: **Vaillant-Schonewelle B.V.**
**Paasheuvelweg 42 Postbus 23250**
**NL-1100 DT Amsterdam(NL)**

(84) Benannte Vertragsstaaten:
**NL**

(73) Patentinhaber: **Vaillant GmbH**
**Riedstrasse 8**
**CH-8953 Dietikon 1(CH)**

(84) Benannte Vertragsstaaten:
**CH LI**

(72) Erfinder: **STUCH, Dieter**
**Hilfringhauserstrasse 95**
**W-5632 Wermelskirchen(DE)**

(74) Vertreter: **Heim, Johann-Ludwig**
**c/o Joh. Vaillant GmbH u. Co Postfach 10 10**
**20 Berghauser Strasse 40**
**W-5630 Remscheid 1(DE)**

2

**Beschreibung**

Die vorliegende Erfindung bezieht sich auf ein Verfahren zur Bildung eines Sollwertes einer Regel- beziehungsweise Steuereinrichtung einer Heizungsanlage gemäß dem Oberbegriff von Anspruch 1, wie es beispielsweise aus DE-A1-26 51 560 bekannt ist.

Bislang war es üblich, solche Sollwerte als Heizkurven darzustellen, wobei die Heizkurve eine Gerade bildete, die sich von einem Punkt aus erstreckte, bei dem die Raumvorlauf- und Außentemperatur gleich sind, bis zu einem weiteren Punkt, bei dem die maximale Vorlauftemperatur der Heizungsanlage der minimalen Außentemperatur erreicht wurde. Eine solche gerade Heizkurve weist den Nachteil auf, daß im Bereich mittlerer Außentemperatur der Sollwert der Vorlauftemperatur zu niedrig ist. Diesen Nachteil kann man dadurch korrigieren, daß man die Heizkurve parallel zu sich selber in Richtung auf höhere Raumtemperaturen verschiebt, nur führt das zu einer Überheizung der von der Heizungsanlage beheizten Räume im Bereich tiefer Außentemperaturen. Hieraus folgt weiterhin ein erhöhter und unnützer Energieverbrauch.

Aus DE-A-19 62 583 ist es bekannt, eine Kurvenfunktion mittels linearer Interpolation aus zwei Teilgeraden anzunähern, die durch elektrische Signale dargestellt werden.

Der vorliegenden Erfindung liegt mithin die Aufgabe zu Grunde, einen Sollwert in Abhängigkeit von der Außentemperatur für die Vorlauftemperatur einer Heizungsanlage vorzugeben, und zwar unabhängig davon, ob es sich um eine gesteuerte oder geregelte Heizungsanlage handelt. Hierbei liegt der Erfindung die Erkenntnis zu Grunde, daß die genaue Abbildung des Sollwerts der Vorlauftemperatur als Funktion der Außentemperatur nach der Formel

$$(1) \qquad \vartheta_{V23} = \frac{\dfrac{\vartheta_{Vmax} + \vartheta_{RLmax}}{2} - \vartheta_{RNS}}{\left(\vartheta_{RNS} - \vartheta_{Amin}\right)^{\frac{1}{n}}} \left(\vartheta_R - \vartheta_A\right)^{\frac{1}{n}} +$$

$$+ \frac{\dfrac{\vartheta_{Vmax} - \vartheta_{RLmax}}{2}}{\left(\vartheta_{RNS} - \vartheta_{Amin}\right)} (\vartheta_R - \vartheta_A) + \vartheta_R$$

zu geschehen hat. Hierbei bedeuten $\vartheta_{V23}$ der Vorlauftemperaturtur-Sollwert in °C, $\vartheta_{Vmax}$ die maximale Vorlauftemperatur, $\vartheta_{RLmax}$ die maximale Rücklauftemperatur, $\vartheta_{RNS}$ die Normraum-Sollwerttemperatur, $\vartheta_R$ die Raumsollwerttemperatur, $\vartheta_{Amin}$ die minimale Außentemperatur, $\vartheta_A$ die Außentemperatur und n ein Radiatorbeiwert. Der Radiatorbeiwert n ist eine dimensionslose Größe und berücksichtigt die Wärmeabgabe des Radiators in Abhängigkeit von der Temperaturdifferenz (Heizmittel-Raumtemperatur).

Im Hinblick auf den Potenzwert ist es allerdings für einen normalen Regler schwer möglich, diese Formeln unmittelbar zu verarbeiten, weil dies zu einem unzumutbaren Aufwand führt.

Der vorliegenden Erfindung liegt die Aufgabe zu Grunde, ein Verfahren zur Bildung eines Sollwertes für einen Regler beziehungsweise einer Steuerung einer Heizungsanlage anzugeben, die eine weitestgehende Näherung des Sollwertes an die eben genannte Kurve darstellt, die aber andererseits von einem Sollwertgeber darstellbar ist.

Die Lösung dieser Aufgabe liegt in den kennzeichnenden Merkmalen des Anspruchs 1.

Weitere Ausgestaltungen und besonders vorteilhafte Weiterbildungen der Erfindung sind Gegenstand der Unteransprüche.

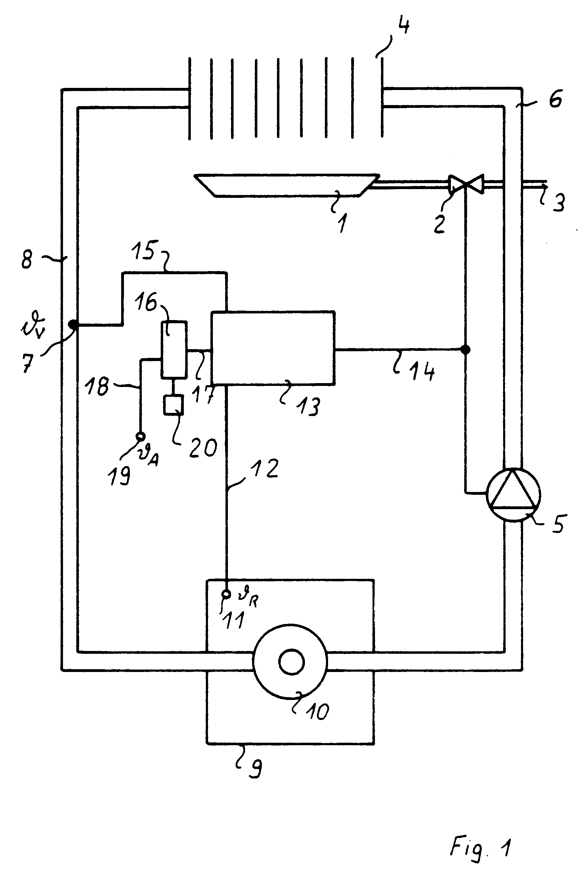

Ausführungsbeispiele der Erfindung sind anhand der Figuren 1 bis neun der Zeichnungen näher beschrieben.

Es zeigen:

Figur 1 eine geregelte Heizungsanlage als schematische Schaltungsdarstellung,

Figur 2 eine gesteuerte Heizungsanlage, gleichermaßen als schematische Darstellung,

die Figuren 3 und 4 Diagramme.

In allen Figuren bedeuten gleiche Bezugszeichen jeweils die gleichen Einzelheiten.

Bei der Heizungsanlage gemäß Figur 1 ist eine Wärmequelle in Form eines Brenners 1 vorgesehen, der über eine mit einem Magnetventil 2 versehene Brennstoffzuleitung 3 gespeist ist. Das Magnetventil 2 kann im taktenden Verhältnis arbeiten, es kann sich auch um ein Proportionalstellungsventil handeln. Der Brenner 1 beheizt einen Wärmetauscher 4, dem Heizungswasser über eine mit einer Pumpe 5 versehene Rücklaufleitung 6 zugeführt ist und dem das erhitzte Wasser über eine mit einem Vorlauftemperaturfühler 7 versehene Vorlaufleitung 8 abgeführt ist. Vor- und Rücklaufleitung führen zu einem Raum 9, in dem wenigstens ein Heizkörper 10 vorhanden ist, der an die Vor- und Rücklaufleitung angeschlossen ist. Im Raum befindet sich ein Raumtemperaturfühler 11 ($\vartheta_R$) der über eine Meßleitung 12 mit einem Regler 13 verbunden ist. Der Regler beherrscht über eine Ausgangsleitung 14 das Magnetventil 2 und den nicht weiter dargestellten elektrischen Antriebsmotor der Pumpe 5. Die über die Leitung 14 gehenden Werte stellen somit die Stellgrößen des Reglers dar. Der Vorlauftemperaturfühler 7 ist über eine Meßleitung 15 mit dem Regler 13 verbunden. Weiterhin ist ein Sollwertgeber 16 vorgesehen, der über eine Leitung 17 mit dem Regler 13 verbunden ist. An den Sollwertgeber 16 ist über eine Leitung 18 ein Außentemperaturfühler 19 ($\vartheta_A$) angeschlossen, weiterhin ist ein Sollwertsteller 20 vorgesehen, der als Handhaber ausgebildet sein kann. Bei dieser geregelten Heizungsanlage wird die Vorlauftemperatur vom Fühler 7 gemessen, vom Regler 13 wird das Gasmagnetventil 2 verstellt. Führungsgröße für den Sollwert ist im wesentlichen die Außentemperatur, die über den Fühler 19 dem Sollwertgeber 16 eingegeben wird. Da die Stellgröße auf der Leitung 14 von einem Meßwertgeber 7 überwacht wird, handelt es sich bei diesem Ausführungsbeispiel um eine Regeleinrichtung.

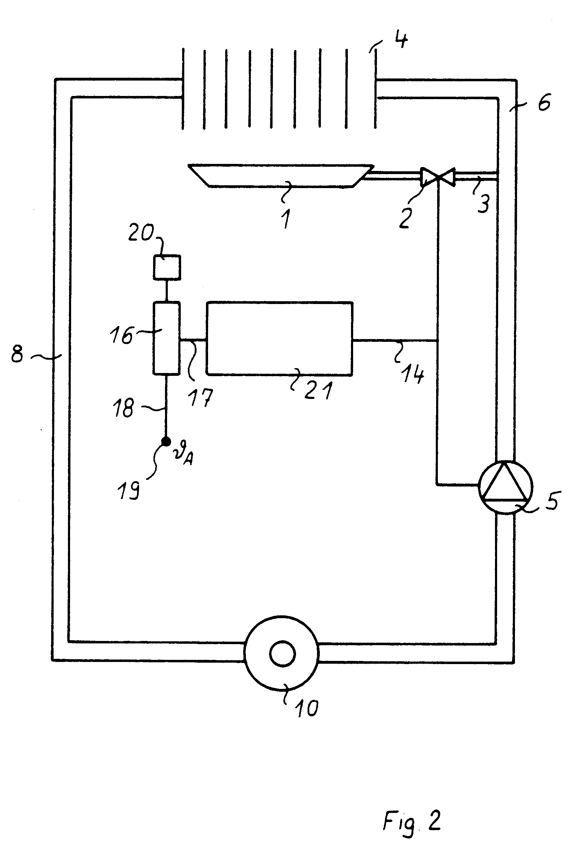

Beim Ausführungsbeispiel gemäß Figur 2 ist als zentrale Einheit eine Steuereinrichtung 21 vorgesehen, die ihre Stellgrößen wie beim vorangegangenen Ausführungsbeispiel auf das Gasmagnetventil 2 und den Antriebsmotor der Pumpe 5 abgibt. Am Sollwertgeber 16 ist ein Handsteller 20 vorhanden, gleichermaßen der Außentemperaturfühler 19. Ein Vorlauftemperaturfühler fehlt. Diese Heizungsanlage arbeitet als Steuerung, da eine Erfassung der Stellgröße über einen Istwertgeber fehlt.

Die Erfindung befasst sich nun damit, dem Sollwertgeber 16 eine Beziehung vorzugeben, nach der die Vorlauftemperatur in Abhängigkeit von der Außentemperatur geregelt oder gesteuert werden kann.

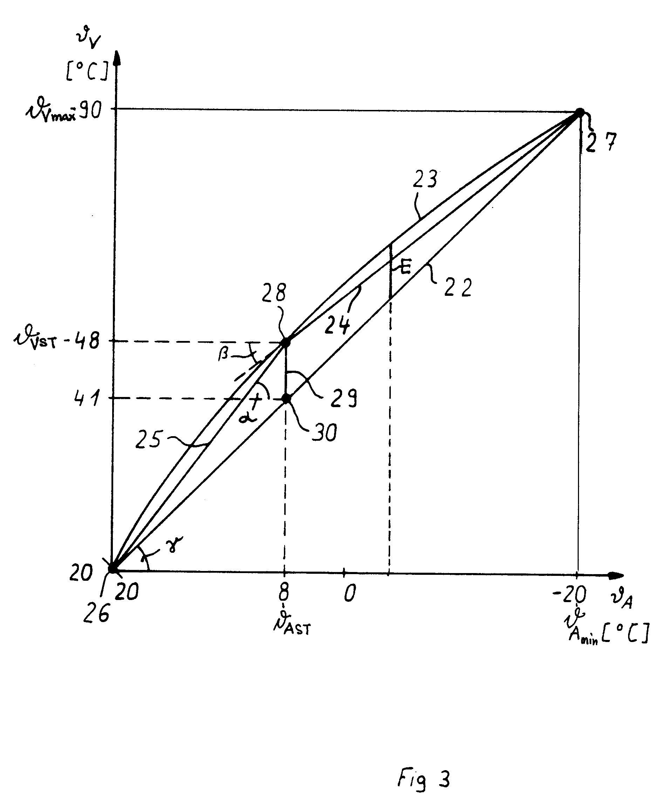

Zur Beschreibung der Erfindung wird nun auf die Figur 3 zurückgegriffen. Die Figur 3 zeigt ein Diagramm, bei dem in der Abszisse die Außentemperatur $\vartheta_A$ in °C von 20 bis -20° aufgetragen ist, während in der Ordinate die Vorlauftemperatur von 20 bis 90° erscheint. Es ergeben sich mehrere Beziehungen 22, 23, 24 und 25, bei denen die Beziehung 22 die Gerade darstellt, die normalerweise als Heizkurve bezeichnet wird. Die Gerade 22 ist somit eine lineare Kurve, die sich vom Koordinatenschnittpunkt bis zum maximalen Belastungspunkt der Heizungsanlage erstreckt. Der Koordinatenschnittpunkt stellt den Punkt dar, bei dem die Außentemperatur $\vartheta_A$, die Vorlauftemperatur $\vartheta_V$ und die Raumtemperatur $\vartheta_R$ den gleichen Wert aufweisen, hier 20 °C. Dieser Punkt ist mit 26 bezeichnet. Der Punkt 27 stellt den Punkt dar, bei dem bei der tiefsten einstellbaren Außentemperatur die maximale Vorlauftemperatur der Heizungsanlage erreicht wird. Im Ausführungsbeispiel wird bei einer Außentemperatur von -20 °C die maximale Vorlauftemperatur von 90 °C erreicht. Es ist hier aber möglich, andere Abhängigkeiten zu wählen. Wird die Heizungsanlage gemäß Figuren eins oder zwei zum Beispiel an einem klimatisch sehr ungünstigen Punkt aufgestellt, bei dem -30 °C erreicht werden können, so ist es möglich, diesem Außentemperaturwert zum Beispiel eine Vorlauftemperatur von 110 °C zuzuordnen. Damit würde sich der Punkt 27 entsprechend verschieben. Das gleiche gilt für Fußbodenheizungen in einem klimatisch günstigen Gebiet, bei dem zum Beispiel einer minimalen Außentemperatur von -5 °C eine Vorlauftemperatur von 40° zugeordnet wird. Während die Gerade 22 die kürzeste Verbindung der Punkte 26 und 27 darstellt, bildet die gekrümmte Kurve 23 die eigentliche genaue Heizkurve gemäß der Beziehung (1). Eine Betrachtung der Kurven 22 und 23 zeigt, daß diese voneinander abweichen, die Kurve 22 bildet gewissermaßen eine Sehne zur Kurve 23. Die Erfindung setzt hier ein und geht von der Erkenntnis aus, daß die Abweichung E beider Kurven, jeweils bezogen auf die Ist-Außentemperatur, die Fehlergröße darstellt, um die der Sollwert für den Regler oder für die Steuerung falsch vorgegeben ist. Wählt man sich auf der gekrümmten Kurve 23 zum Beispiel einen Punkt 28 in einen mittleren Bereich, so stellt die Strecke 29 - das Lot des Punktes 28 bis zum Schnittpunkt mit der Heizkurve 22 im Punkt 30 - den Fehler E dar, um den der Sollwert der Regel- oder Steuereinrichtung falsch vorgegeben ist. Es wurde nun gefunden, daß man den Punkt 28 sowohl mit dem Punkt 26 durch eine Gerade 25 als auch durch eine Gerade 24 mit dem Punkt 27 verbinden kann und die Sollwerte nach den beiden Teilgeraden 24 und 25 vorgeben kann. Das bedeutet, daß der Fehler des Sollwertes gegenüber der Geraden 22 verkleinert wird. Eine optimale Verkleinerung des Fehlers E findet dann statt, wenn man den Punkt 28 dort wählt, wo der Sollwertfehler am größten ist, das heißt die Streckenlänge der Strecke 29 das Maximum hat.

Dem Punkt 28 liegt ein Vorlauftemperaturwert $\vartheta_V$ von 48° und ein Außentemperaturwert von 8° zu Grunde. Beim Punkt 30 liegt der Außentemperaturwert gleichermaßen bei 8°, der Vorlauftemperaturwert bei 41°. Bezüglich den Temperaturwerten von 48° und 41° bilden die Geraden 24 und 25 Winkel $\alpha$ und $\beta$, die in einer später noch näher beschriebenen Beziehung zueinander und zur Waagerechten stehen.

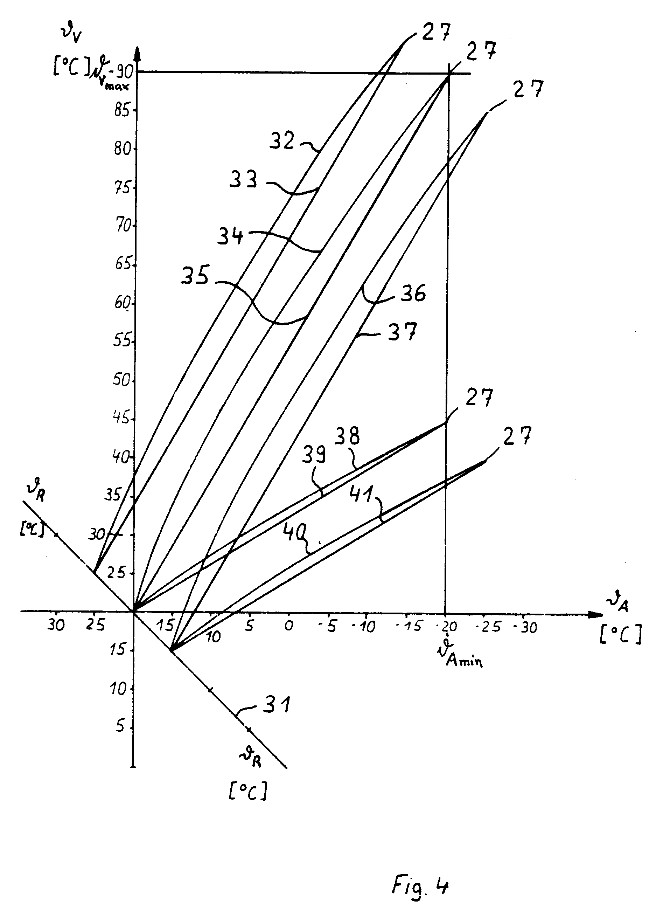

Aus der Figur 4, die wiederum ein Diagramm darstellt, das die Abhängigkeit der Vorlauftemperatur von der Außentemperatur zeigt, bei dem zusätzlich noch die Raumtemperatur $\vartheta_R$ gleichermaßen in °C aufgetragen ist. Hieraus geht übrigens hervor, daß der Punkt 27 frei wählbar ist. Während bei einer Radiatorenheizung die oberen Bereiche gewählt werden, werden bei einer Fußbodenheizung die tieferliegenden Bereiche gewählt. Für die weiteren Ausführungen wird ausgegangen von Gleichung (3), die der Gleichung (1) entspricht:

$$
(3) \qquad \vartheta_{V23} = \frac{\dfrac{\vartheta_{Vmax} + \vartheta_{RLmax}}{2} - \vartheta_{RNS}}{\vartheta_{RNS} - \vartheta_{Amin}} \left( \vartheta_R - \vartheta_A \right) \frac{1}{n} +
$$

$$
+ \frac{\dfrac{\vartheta_{Vmax} - \vartheta_{RLmax}}{2}}{\left( \vartheta_{RNS} - \vartheta_{Amin} \right)} \left( \vartheta_R - \vartheta_A \right) + \vartheta_R
$$

Diese Gleichung entspricht der Kurve 23 in Figur 3. Die Kurve 22 in derselben Figur 3 wird dargestellt durch die Gleichung (4)

$$
(4) \qquad \vartheta_{V22} = \frac{\vartheta_{Vmax} - \vartheta_{RNS}}{\vartheta_{Amin} - \vartheta_{RNS}} \left( \vartheta_A - \vartheta_R \right) + \vartheta_R
$$

Da die Strecke 29 die größtmögliche Abweichung zwischen beiden Kurven darstellt, sind zur Ermittlung des Maximums der Strecke 29 beide Gleichungen voneinander zu subtrahieren. Um die Gleichungen übersichtlich zu halten, werden zunächst folgende Vereinfachungen durchgeführt: Gleichung (4), so wird eingeführt gemäß Gleichung (5) und Gleichung (6). Durch Einführung durch Gleichung (5) und (6) vereinfacht sich Gleichung (4) zu Gleichung (7).

(5)  $t = \vartheta_R - \vartheta_A$

$$
(6) \qquad \gamma = \frac{\vartheta_{Vmax} - \vartheta_{RNS}}{\vartheta_{Amin} - \vartheta_{RNS}}
$$

(7)  $\vartheta_{V22} = -\gamma t + \vartheta_R$

Ausgehend von Gleichung (3) werden Vereinfachungen gemäß der Gleichungen (8) und (9) durchgeführt.

$$(8) \quad \Psi = \frac{\frac{\vartheta_{Vmax} + \vartheta_{RLmax}}{2} - \vartheta_{RNS}}{(\vartheta_{RNS} - \vartheta_{Amin})^{\frac{1}{n}}} \qquad (9) \quad \varphi = \frac{\frac{\vartheta_{Vmax} - \vartheta_{RLmax}}{2}}{(\vartheta_{RNS} - \vartheta_{Amin})}$$

Unter Berücksichtigung der Gleichungen (5), (8) und (9) vereinfacht sich Gleichung (3) zu Gleichung (10).

$$(10) \qquad \vartheta_{V23} = \Psi(t)^{\frac{1}{n}} + \varphi(t) + \vartheta_R$$

Nunmehr werden die Gleichungen (7) und (10) voneinander subtrahiert, so daß sich Gleichung (11) ergibt.

$$(11) \qquad E = \Psi(t)^{\frac{1}{n}} + \varphi(t) + \vartheta_R + \gamma t - \vartheta_R$$

Damit die Strecke 29, das heißt diese Differenz E, gemäß Gleichung (11) ein Maximum wird, ist die Ableitung von dE nach $d\vartheta_A$ zu bilden gemäß Gleichung (12). Dieser Differentialquotient ist Null zu setzen.

$$(12) \qquad \frac{dE}{d\vartheta_A} = -\gamma - \frac{1}{n}\Psi(t)^{\frac{1}{n}-1} - \varphi = 0$$

Anschließend werden die Werte der Gleichungen (5), (6), (8) und (9) eingesetzt und die so erhaltene Gleichung wird nach $\vartheta_A$ aufgelöst. Somit ergibt sich Gleichung (13).

$$(13) \qquad \vartheta_{AST} = \vartheta_R - n^{\frac{n}{1-n}}(\vartheta_{RNS} - \vartheta_{Amin})$$

Diese Gleichung besagt also, daß die maximale Abweichung zwischen den Kurven 22 und 23 von der Raumtemperatur $\vartheta_R$ abhängt, von der ein Produkt, gebildet aus dem Radiatorkoeffizienten (n = Radiatorbeiwert) und der Differenz zwischen der Raumnorm-Sollwerttemperatur $\vartheta_{RNS}$ und der minimalen Außentemperatur, gebildet wird. Nunmehr wird der für $\vartheta_{AST}$ gemäß Gleichung (13) gefundene Ausdruck in die Gleichung (3) eingesetzt, und zwar dort für $\vartheta_A$. Somit ergibt sich Gleichung (14).

$$(14) \quad \vartheta_V = \frac{\xi}{\omega^{\frac{1}{n}}} \left( \vartheta_R - \left( \vartheta_R - \left( \frac{n\,\omega}{\xi} \left( \frac{\vartheta_{Vmax} - \vartheta_{RNS}}{\omega} - \frac{\phi}{\omega} \right) \right)^{\frac{n}{n-1}} \right)^{\frac{1}{n}} \right) + \frac{\phi}{\omega} \left( \vartheta_R - \left( \vartheta_R - \left( \frac{n\,\omega}{\xi} \right. \right. \right.$$

$$\left. \left. \left. \cdot \left( \frac{\vartheta_{Vmax} - \vartheta_{RNS}}{\omega} - \frac{\phi}{\omega} \right) \right)^{\frac{n}{1-n}} \right) \right) + \vartheta_R$$

Hierbei sind Vereinfachungen gemäß den Gleichungen (15) bis (17) vorgenommen worden.

$$(15) \quad \xi = \frac{\vartheta_{Vmax} + \vartheta_{RLmax}}{2} - \vartheta_{RNS}$$

$$(16) \quad \phi = \frac{\vartheta_{Vmax} - \vartheta_{RLmax}}{2}$$

$$(17) \quad \omega = \vartheta_{RNS} - \vartheta_{Amin}$$

Durch Umformen und Vereinfachen von Gleichung (14) wird Gleichung (18) erhalten.

$$(18) \quad \vartheta_{VST} = n^{\frac{n}{1-n}} \left( \frac{n+1}{2} \vartheta_{Vmax} + \frac{n-1}{2} \vartheta_{RLmax} - n\,\vartheta_{RNS} \right) + \vartheta_R$$

In Gleichung (18) kann man den ersten Ausdruck als Konstante K gemäß Gleichung (19)

$$(19) \quad K = n^{\frac{n}{1-n}} \left( \frac{n+1}{2} \vartheta_{Vmax} + \frac{n-1}{2} \vartheta_{RLmax} - n\,\vartheta_{RNS} \right)$$

setzen. Damit vereinfacht sich Gleichung (18) zu Gleichung (20),

$$(20) \quad \vartheta_{VST} = K + \vartheta_R$$

was bedeutet, daß die Stütztemperatur, das heißt der Ordinatenwert des Punktes 28 in Figur 3, nur noch mit der Raumtemperatur variabel ist.

Aus dieser Erkenntnis eröffnet sich die Möglichkeit, durch Wahl einer vom Benutzer gewünschten Raumtemperatur, das heißt Festlegung der Koordinatenwerte des Punktes 26, und der Auslegung der Heizungsanlage, das heißt der Zuordnung einer maximalen Vorlauftemperatur $\vartheta_{Vmax}$, zu einer minimalen Außentemperatur $\vartheta_{Amin}$, wird der Punkt 27 festgelegt. Da der Punkt 28 gemäß Gleichung (20) ermittelt werden kann, da die Konstante K nur von den eben erwähnten Werten und dem Radiatorkennwert n abhängt, liegt somit bei der Wahl der Heizungsanlage und der gewünschten Raumtemperatur der Punkt 28 gleichermaßen in seinen Koordinaten fest. Damit wird es möglich, die Gleichungen für die geraden Teile 24 und 25 aufzustellen. Die Gerade 25 ist durch Gleichung (21) definiert.

$$(21) \qquad \tan \alpha = \frac{\vartheta_{VSTN} - \vartheta_{RNS}}{\vartheta_{ASTN} - \vartheta_{RNS}}$$

Hierbei wurde davon ausgegangen, daß die Raumtemperatur $\vartheta_R$ gleich der der Raumnorm-Solltemperatur $\vartheta_{RNS}$ ist. Ist das nicht der Fall, werden alle Werte parallel zu den Kurven 22 und 23 verschoben. Die Verschiebung hat gemäß der Kurve 31 in Figur vier zu erfolgen. Die Gleichung (22)

$$(22) \qquad \tan \beta = \frac{\vartheta_{Vmax} - \vartheta_{VSTN}}{\vartheta_{Amin} - \vartheta_{ASTN}}$$

gilt für das Geradenteilstück 24. Bildet man den Quotient der Gleichungen (21) und (22), so wird gewissermaßen das Steigungsverhältnis bei der Geraden durch Gleichung (23)

$$(23) \qquad Q = \frac{\tan \alpha}{\tan \beta}$$

abgebildet. Werden in die Gleichung (23) die Werte der Gleichung (13) eingesetzt, ergibt sich Gleichung (24).

$$(24) \qquad Q = \left( \frac{\vartheta_{RNS} - \vartheta_{VSTN}}{\vartheta_{Vmax} - \vartheta_{VSTN}} \right) \left( 1 - n^{-\frac{n}{1-n}} \right)$$

Wenn nun der Heizungsbauer vor der Aufgabe steht, die Steuerung 21 beziehungsweise die Regelung 13 bezüglich der Sollwertvorgaben einzustellen, so wird dem Sollwertgeber 16 zunächst die gewünschte Raumtemperatur vorgegeben und die Zuordnung der maximalen Vorlauftemperatur $\vartheta_{Vmax}$ zur minimal zu erwartenden Außentemperatur. Damit liegen im Sollwertgeber die Punkte 26 und 27 unmittelbar fest. Nach der Gleichung (19) beziehungsweise (20) liegen aber auch die Koordinaten des Punktes 28 fest. Da die Verbindungen der drei Punkte untereinander über Geraden dargestellt werden, werden im Sollwertgeber lineare Funktionen gebildet, die den Gleichungen (21) und (22) entsprechen, womit die Lage der Geraden 24 und 25 festliegt. Über den Wert der Gleichung (24) ist der Winkel beschrieben , den die beiden Geraden 24 und 25 in Punkt 28 zueinander bilden. Das heißt, es könnte zunächst die Lage der Geraden 25 durch Verbinden der Punkte 26 und 28 im Sollwertgeber eingestellt werden und anschließend über die Vorgabe der Werte gemäß der Gleichung (24) die Lage der Geraden 24 ausgehend vom Punkt 28. Da es sich hierbei um lineare Beziehungen handelt, eignen sich diese Beziehungen hervorragend zur Eingabe im Mikroprozessor, da hier mit einem verhältnismäßig geringen Aufwand die Programmierung möglich ist.

Es soll aber darauf hingewiesen werden, daß die Schaltung zur Vorgabe der Funktionen nicht davon abhängig ist, daß ein Mikroprozessor Verwendung findet, die entsprechenden Beziehungen können auch über herkömmliche Bausteine dargestellt werden.

Aus der Gleichung (20) ist ersichtlich, daß zur einmaligen Justage des Sollwertgebers die Erfassung der Raumtemperatur nützlich ist, deswegen ist im Ausführungsbeispiel der Raumtemperaturfühler 11 vorgesehen. Wenn man aber eine bestimmte Raumtemperatur als Sollwert vorgibt, kann im Prinzip auch ohne Raumtemperaturfühler gearbeitet werden, was im Ausführungsbeispiel nach Figur 2 vorgenommen wurde.

Die Erfindung war bislang unter der Voraussetzung beschrieben worden, daß bestimmte Werte für die maximale Vorlauftemperatur $\vartheta_{Vmax}$ . und die minimale Außentemperatur $\vartheta_{Amin}$ . sowie die Raumtemperatur von 20° vorgegeben sind. Aus der Figur 4 sind nun Kurven 32 bis 40 ersichtlich, die entstehen, wenn von einem bestimmten Wert der maximalen Vorlauftemperatur abgewichen wird beziehungsweise wenn unterschiedliche Werte für die Raumtemperatur eingestellt werden. Die Gleichungen (19), (20) und 24) sind aber für beliebig wählbare Werte der maximalen Vorlauftemperatur, der minimalen Außentemperatur und der Raumtemperatur entwickelt worden. Die Kurven 33, 35, 39 und 41 stellen Äquivalente zu der Heizkurve 22 dar, während die gekrümmten Kurven 32, 34, 36, 38 und 40 Äquivalente zu der gekrümmten Heizkurve 23 darstellen. Die geraden Stücke 24 und 25 beziehungsweise die ihnen entsprechenden Äquivalente sind aus Vereinfachungsgründen in Figur 4 nicht eingezeichnet.

## Patentansprüche

1. Verfahren zur Bildung eines Sollwertes $\vartheta_V$ der Vorlauftemperatur für die Regel- beziehungsweise Steuereinrichtung einer Heizungsanlage als Funktion der Außentemperatur $\vartheta_A$ unter Benutzung eines Geradenstückes (22) gemäß einer linearen Beziehung zwischen dem Vorlauftemperatur-Sollwert $\vartheta_V$ und der Außentemperatur $\vartheta_A$ als Näherung für ein Kurvenstück (23) gemäß der tatsächlichen nichtlinearen Beziehung zwischen diesen Größen $\vartheta_V$ und $\vartheta_A$, wobei die jeweiligen Endpunkte des Geradenstückes (22) und des Kurvenstückes (23) bei einer minimalen Außentemperatur $\vartheta_{Amin}$ und einer maximalen Vorlauftemperatur $\vartheta_{Vmax}$ einerseits und bei gleichen Außen- und Vorlauftemperaturwerten $\vartheta_A = \vartheta_V$ andererseits identisch sind, dadurch gekennzeichnet, daß ein Punkt (28) zwischen den beiden Endpunkten (26, 27) auf dem Kurvenstück (23) gemäß der nichtlinearen Beziehung ermittelt wird und daß dieser Punkt (28) mit den beiden Endpunkten (26, 27) durch je ein Teilgeradenstück (24, 25) mit jeweils unterschiedlicher Steigerung tan $\alpha$ beziehungsweise tan $\beta$ verbunden wird, wobei diese beiden Teilgeradenstücke (24, 25) als bessere Näherung für das Kurvenstück (23) die Beziehung zur Berech-nung des Sollwertes $\vartheta_V$ der Vorlauftemperatur in Abhängigkeit von der Außentemperatur $\vartheta_A$ bildet und daß der Punkt auf den Stützpunkt (28) mit den Koordinaten $\vartheta_{AST}$ und $\vartheta_{VST}$ gelegt wird, wo die Abweichung E zwischen dem Geradenstück (22) und dem Kurvenstück (23), gemessen parallel zur Ordinate $\vartheta_V$, ein Maximum (29) ist.

2. Verfahren nach Anspruch 1, dadurch gekennzeichnet, daß das Maximum (29) der Abweichung E durch Differenzierung der Abweichung E nach der Außentemperatur $\vartheta_A$ und Nullsetzung des Differentialquo-tienten

$$\frac{dE}{d\vartheta_A} = 0$$

nach folgender Beziehung ermittelt wird:

$$(12) \qquad \frac{dE}{d\vartheta_A} = -\gamma - \frac{1}{n}\varphi(t)^{\frac{1}{n}-1} - \varphi = 0$$

mit

$$(5) \qquad t = \vartheta_R - \vartheta_A$$

$$(6) \qquad \gamma = \frac{\vartheta_{Vmax} - \vartheta_{RNS}}{\vartheta_{Amin} - \vartheta_{RNS}}$$

$$(8) \quad \psi = \frac{\frac{\vartheta_{Vmax} + \vartheta_{RLmax}}{2} - \vartheta_{RNS}}{(\vartheta_{RNS} - \vartheta_{Amin})^{\frac{1}{n}}}$$

$$(9) \quad \varphi = \frac{\frac{\vartheta_{Vmax} - \vartheta_{RLmax}}{2}}{(\vartheta_{RNS} - \vartheta_{Amin})}$$

wobei n den Radiatorbeiwert (vorzugsweise n = 1,3), $\vartheta_{RNS}$ die Raumnorm-Soll-Temperatur, $\vartheta_R$ die Raumtemperatur, $\vartheta_A$ der Istwert der Außentemperatur und $\vartheta_{RLmax}$ die maximale Rücklauftemperatur sind.

**3.** Verfahren nach Anspruch 1 oder 2, dadurch gekennzeichnet, daß das Verhältnis Q der Steigerungen tan $\alpha$ und tan $\beta$ der beiden Geraden (24, 25) nach folgender Beziehung gewählt ist:

$$(24) \quad Q = \left( \frac{\vartheta_{RNS} - \vartheta_{VSTN}}{\vartheta_{Vmax} - \vartheta_{VSTN}} \right) \left( 1 - n \right)^{-\frac{n}{1-n}}$$

wobei $\vartheta_{RNS}$ die Raumnorm-Soll-Temperatur, $\vartheta_{VSTN}$ die Vorlaufstütztemperatur bei Normauslegung, $\vartheta_{Vmax}$ die maximale Vorlauftemperatur und n den Radiatorbeiwert bedeuten.

## Claims

**1.** A method of determining a flow temperature setpoint $\vartheta_V$ for an apparatus for automatically controlling or controlling a heating system as a function of the outdoor temperature $\vartheta_A$ with reference to a straight line section (22) representing a linear relationship between the flow temperature setpoint $\vartheta_V$ and the outdoor temperature $\vartheta_A$ as an approximation to a curve section (23) representing the non-linear actual relationship between said variables $\vartheta_V$ and $\vartheta_A$, wherein the end points of the straight line section (22) and of the curve section (23) are identical for a minimum outdoor temperature $\vartheta_{Amin}$ and a maximum flow temperature $\vartheta_{Vmax}$, on the one hand, and for identical outdoor and flow temperatures $\vartheta_A = \vartheta_V$, on the other hand, characterized in that a point (28) between the two end points (26, 27) is determined on the curve section (23) representing the non-linear relationship and said point (28) is connected to the two end points (26, 27) by respective straight line sections (24, 25) having different slopes tan $\alpha$ and tan $\beta$, respectively. Said partial straight line sections (24, 25) constitute a better approximation to the curve section (23) and are used for the computation of the flow temperature setpoint $\vartheta_V$ in dependence on the outdoor temperature $\vartheta_A$ and the point is placed on the point of support (28) having such coordinates $\vartheta_{AST}$ and $\vartheta_{VST}$ that the deviation E between the straight line section (22) and the curve section (23), measured parallel to the axis of ordinates $\vartheta_V$ is a maximum (29).

**2.** A method according to claim 1, characterized in that the maximum (29) of the deviation E is determined in that the deviation E is differentiated with respect to the outdoor temperature $\vartheta_A$ and the differential quotient

$$\frac{de}{d\vartheta_A}$$

is equated to zero in accordance with the following relationship

wherein

$$(12) \qquad \frac{d}{d\vartheta_A}\left[\;\right] = -\gamma - \frac{1}{n}\psi(t)^{\frac{1}{n}-1} - \varphi = 0$$

$$(5) \qquad t = \vartheta_R - \vartheta_A$$

$$(6) \qquad \gamma = \frac{\vartheta_{Vmax} - \vartheta_{RNS}}{\vartheta_{Amin} - \vartheta_{RNS}}$$

$$(8) \qquad \psi = \frac{\dfrac{\vartheta_{Vmax} + \vartheta_{RLmax}}{2} - \vartheta_{RNS}}{(\vartheta_{RNS} - \vartheta_{Amin})^{\frac{1}{n}}}$$

$$(9) \qquad \varphi = \frac{\dfrac{\vartheta_{Vmax} - \vartheta_{RLmax}}{2}}{(\vartheta_{RNS} - \vartheta_{Amin})}$$

n is the radiator coefficient (preferably n = 1.3), $\vartheta_{RNS}$ is the standard room temperature setpoint, $\vartheta_R$ is the room temperature, $\vartheta_A$ is the actual outdoor temperature and $\vartheta_{RLmax}$ is the maximum return flow temperature.

3. A method according to claim 1 or 2, characterized in that the ratio Q of the slopes tan and tan $\beta$ of the two straight lines (24, 25) is selected in accordance with the following relationship:

$$(24) \qquad Q = \left(\frac{\vartheta_{RNS} - \vartheta_{VSTN}}{\vartheta_{Vmax} - \vartheta_{VSTN}}\right)\left(1 - n^{-\frac{n}{1-n}}\right)$$

wherein $\vartheta_{RNS}$ is the standard room temperature setpoint, $\vartheta_{VSTR}$ is the flow-sustaining temperature in case of a normal design, $\vartheta_{Vmax}$ is the maximum flow temperature and n is the radiator coefficient.

**Revendications**

1. Procédé pour la formation d'une consigne $\vartheta_V$ de la température de départ pour le dispositif de réglage ou de commande d'une installation de chauffage, en fonction de la température extérieure $\vartheta_A$, à l'aide d'une droite (22) suivant une relation linéaire entre la consigne $\vartheta_V$ de la température de départ et la température extérieure $\vartheta_A$ en approximation d'une courbe (23) suivant la relation effective, non linéaire entre ces grandeurs $\vartheta_V$ et $\vartheta_A$, les points finaux de la droite (22) et de la courbe (23) étant identiques pour une température extérieure minimale $\vartheta_{Amin}$ et une température de départ maximale $\vartheta_{Vmax}$, d'une part, et pour des températures $\vartheta_A = \vartheta_V$, de l'autre, caractérisé par le fait qu'un point (28) est défini entre les deux points finaux (26, 27) de la courbe (23) suivant la relation non linéaire, et que ledit point (28) est relié aux deux points finaux (26, 27) par une droite (24 respectivement 25) présentant une

11

inclinaison $\tan \alpha$ ou $\tan \beta$ différente, ces deux droites (24, 25) approchant mieux la courbe (23), formant la relation pour le calcul de la consigne $\vartheta_V$ de la température de départ en fonction de la température extérieure $\vartheta_A$, et que le point est mis sur (28) avec les coordonnées $\vartheta_{AST}$ et $\vartheta_{VST}$, l'écart E entre la droite (22) et la courbe (23), mesuré parallèlement à l'ordonnée $\vartheta_V$, représentant un maximum (29).

**2.** Procédé suivant la revendication 1, caractérisé par le fait que le maximum (29) de l'écart E est déterminé par différentiation de l'écart E par la température extérieure $\vartheta_A$ et mise à zéro de la dérivée

$$\frac{dE}{d\vartheta_A} = 0,$$

suivant la relation ci-après:

$$(12) \quad \frac{dE}{d\vartheta_A} = -\gamma - \frac{1}{n}\,\psi(t)^{\frac{1}{n}-1} - \varphi = 0$$

avec

$$(5) \quad t = \vartheta_R - \vartheta_A$$

$$(6) \quad \gamma = \frac{\vartheta_{Vmax} - \vartheta_{RNS}}{\vartheta_{Amin} - \vartheta_{RNS}}$$

$$(8) \quad = \frac{\dfrac{\vartheta_{Vmax} + \vartheta_{RLmax}}{2} - \vartheta_{RNS}}{(\vartheta_{RNS} - \vartheta_{Amin})^{\frac{1}{n}}}$$

$$(9) \quad = \frac{\dfrac{\vartheta_{Vmax} - \vartheta_{RLmax}}{2}}{(\vartheta_{RNS} - \vartheta_{Amin})}$$

où 'n' représente le coefficient de radiateur (de préférence n = 1,3), $\vartheta_{RNS}$, la consigne standard de température intérieure, $\vartheta_R$, la température intérieure, $\vartheta_A$, la température extérieure effective et $\vartheta_{RLmax}$, la température de retour maxi.

**3.** Procédé suivant la revendication 1 ou 2, caractérisé par le fait que le rapport Q des inclinaisons $\tan \alpha$ et $\tan \beta$ des deux droites (24, 25) est choisi suivant la relation ci-après:

$$(24) \quad Q = \left( \frac{\vartheta_{RNS} - \vartheta_{VSTN}}{\vartheta_{Vmax} - \vartheta_{VSTN}} \right) \left( 1 - n^{-\frac{n}{1-n}} \right)$$

où $\vartheta_{RNS}$ représente la consigne standard de températur intérieure, $\vartheta_{VSTN}$, la température de départ limite minimum en cas de conception standard, $\vartheta_{Vmax}$,la température de départ maxi et 'n', le coefficient de radiateur.

Fig. 1

EP 0 116 572 B1

Fig. 2

15

Fig 3

Fig. 4